(19) Europäisches Patentamt
European Patent Office
Office européen des brevets

(11) Veröffentlichungsnummer: **0 359 038**
**A2**

# (12) EUROPÄISCHE PATENTANMELDUNG

(21) Anmeldenummer: **89116056.6**

(22) Anmeldetag: **31.08.89**

(51) Int. Cl.5: **C08G 63/60 , C08G 63/64 , C08G 63/20**

(30) Priorität: **13.09.88 DE 3831122**

(43) Veröffentlichungstag der Anmeldung: **21.03.90 Patentblatt 90/12**

(84) Benannte Vertragsstaaten: **BE DE FR GB IT NL**

(71) Anmelder: **BAYER AG**

**D-5090 Leverkusen 1 Bayerwerk(DE)**

(72) Erfinder: **Pielartzik, Harald, Dr.**
**Doerperhofstrasse 39**
**D-4150 Krefeld(DE)**
Erfinder: **Meyer, Rolf-Volker, Dr.**
**Buchheimerstrasse 23**
**D-4150 Krefeld(DE)**
Erfinder: **Alewelt, Wolfgang, Dr.**
**Stratumer Feld 17**
**D-4150 Krefeld 12(DE)**

## (54) Flüssigkristalline Polykondensate mit verbesserter Thermostabilität, Verfahren zu ihrer Herstellung und ihre Verwendung zur Herstellung von Formkörpern, Folien, Fasern und Filamenten.

(57) Die erfindungsgemäßen flüssigkristallinen Polykondensate auf Basis von aromatischen Hydroxycarbonsäuren, gegebenenfalls aromatischen Aminocarbonsäuren, Diphenolen, gegebenenfalls Aminophenolen, aromatischen Dicarbonsäuren und gegebenenfalls Kohlensäure erhältlich durch Polykondensation der genannten difunktionellen Monomere in der Schmelze in Gegenwart von aromatischen Estern mit definierter Sequenz der Struktureinheiten der Formel

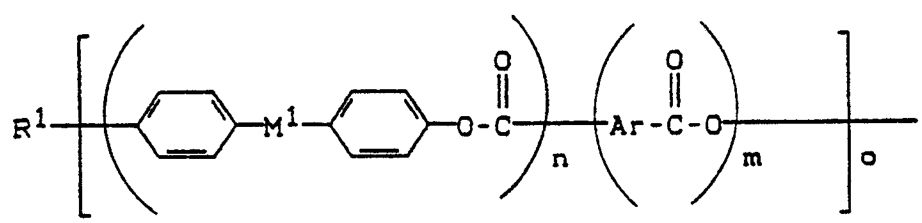

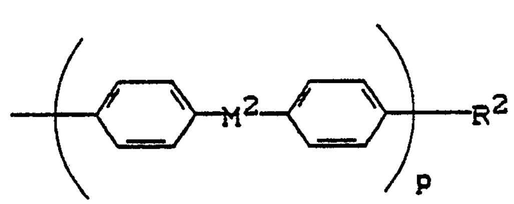

oder

von Oligomeren mit statistischer Verteilung der Struktureinheiten der Formel

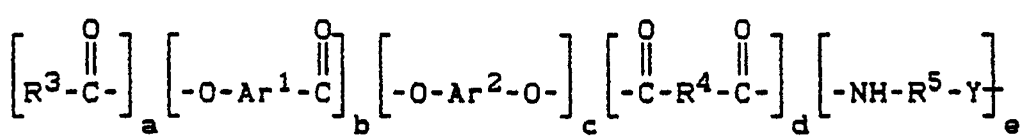

EP 0 359 038 A2

besitzen eine gute thermische Stabilität und sind unter den Verarbeitungsbedingungen viskositätsstabil. Die flüssigkristallinen Polykondensate können verwendet werden zur Herstellung von Formkörpern, Folien, Fasern und Filamenten.

## Flüssigkristalline Polykondensate mit verbesserter Thermostabilität, Verfahren zu ihrer Herstellung und ihre Verwendung zur Herstellung von Formkörpern, Folien, Fasern und Filamenten

Die Erfindung betrifft flüssigkristalline Polykondensate mit verbesserter Thermostabilität, ein Verfahren zur Herstellung der Polykondensate und ihre Verwendung zur Herstellung von Formkörpern, Folien, Fasern und Filamenten.

Thermotrope bzw. flüssigkristalline Polykondensate aus aromatischen Hydroxycarbonsäuren, aromatischen Dicarbonsäuren, aromatischen Dihydroxyverbindungen und gegebenenfalls Kohlensäure sowie gegebenenfalls anderen aromatischen difunktionellen Verbindungen sind seit langem bekannt (vgl. z.B. die Literaturzusammenfassung in der DE-OS 33 38 623, Recent Advances in Liquid Crystalline Polymers, Elsevier, Appl. Sci. Publishers, 1985 (L. Chapoy) oder British Polymer Journal, Vol. 12, No. 4, Seiten 132-146 (1980) (J.-I. Jin et al)).

Formkörper, die aus flüssigkristallinen Polykondensaten hergestellt werden, besitzen vor allem besondere mechanische Eigenschaften, wie hohe Festigkeit und Steifigkeit bei gutem Zähigkeitsniveau, und eine gute thermische Beständigkeit, so daß sie für verschiedenste technische Einsatzzwecke bei denen gute mechanische Eigenschaften und eine hohe thermische Beständigkeit eine Rolle spielen, in Frage kommen. Im allgemeinen besitzen die flüssigkristallinen (LC)-Polykondensate jedoch eine hohe Schmelzviskosität, die technische Probleme bei der Verarbeitung der Polykondensate zu Formkörpern mit sich bringt. Formmassen aus LC-Polymeren erfordern beispielsweise eine höhere Verarbeitungstemperatur. Durch die höhere Verarbeitungstemperatur kann es jedoch leicht zum thermischen Abbau der eingesetzten LC-Polymeren kommen, wodurch beispielsweise die mechanischen Eigenschaften der Formkörper beeinträchtigt werden. Dies trifft besonders für Polymere zu, deren reaktive Endgruppen nicht durch sogenannte Endverkappungsreagenzien (Kettenabbrecher) geschützt sind. Ein wesentlicher Faktor für die thermische Stabilität solcher Polymere ist deshalb eine entsprechende Blockierung der reaktiven Endgruppen durch sogenannte Endverkappungsagenzien, damit Kettenspaltung, unerwünschte Umlagerungen oder ein verarbeitungsstörender Molgewichtsaufbau unter Abspaltung von flüchtigen Nebenprodukten bei den Polymeren vermieden werden kann. Beispielsweise ist bekannt, daß die in die LC-Polymere eingebauten aromatischen Hydroxycarbonsäuren leicht decarboxylieren (s. D. Sitamanikyam und E.V. Sundaram, Indian J. Chem., 1972, 1011-1013).

Die Verwendung der bekannten und üblichen Endverkappungsagenzien, wie Phenole, Amine oder Carbonsäuren, ist wegen der hohen Reaktionstemperaturen bei der Schmelzumesterung und der Flüchtigkeit der Endverkappungsagenzien mit großen Problemen verbunden und führt zu schwer reproduzierbaren Ergebnissen (siehe hierzu Vergleichsbeispiele). Aus diesem Grund wird in der EP 162 667 eine Steuerung des Kettenaufbaus über das Molverhältnis von Carboxyl- zu phenolischen OH-Gruppen beschrieben. Diese Produkte enthalten aber reaktive Kettenenden und sind daher nicht genügend thermostabil.

In der EP 161 413 werden schwerflüchtige, carboxyl- oder phenolgruppenhaltige Phthalimide als Endverkappungsagenzien bzw. Kettenabbrecher für flüssigkristalline Polyester beschrieben. Als Vorteil wird herausgestellt, daß die Polyester noch einer nachträglichen Feststoffkondensation zugänglich sind. Solche Polyester verändern also bei thermischer Belastung ihr Molgewicht. Sie sind somit nicht viskositätsstabil und können sich unter Verarbeitungsbedingungen in ihrem Fließverhalten unkontrolliert und damit nachteilig verändern.

Gegenstand der Erfindung sind flüssigkristalline Polykondensate auf Basis von

a) aromatischen Hydroxycarbonsäuren
b) gegebenenfalls aromatischen Aminocarbonsäuren
c) Diphenolen
d) gegebenenfalls Aminophenolen
e) aromatischen Dicarbonsäuren und
f) gegebenenfalls Kohlensäure erhältlich durch Schmelzumesterung der von den Hydroxycarbonsäuren, Diphenolen und Aminophenolen abgeleiteten $C_1$ bis $C_4$-Acylester, vorzugsweise den Acetaten, mit den Dicarbonsäuren oder durch Schmelzumesterung der Phenylester der Hydroxycarbonsäuren, gegebenenfalls Aminocarbonsäuren, Dicarbonsäuren und Kohlensäure mit den Diphenolen und gegebenenfalls Aminophenolen bei 150 bis 380 °C in Gegenwart von aromatischen Estern der Formel (I) mit definierter Sequenz der Struktureinheiten

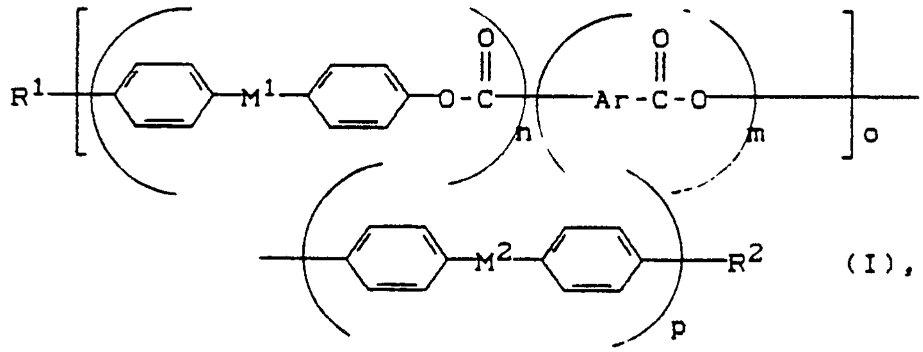

(I),

worin

Ar ein aromatischer Rest ist, der einkernig oder mehrkernig sein kann, wobei der mehrkernige Rest einbindig verknüpft oder annelliert sein kann,

$R^1$ und $R^2$ gleich oder verschieden sein können und H, Chlor, O-$C_1$-$C_4$-Alkyl, -O-$C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$- Cycloalkyl, fluoriertes $C_6$-$C_{14}$-Aryl, oder ein Rest der Formeln (I)/a) bis I) sind:

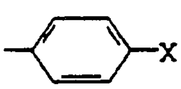 , 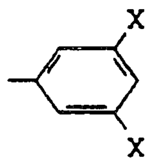 , 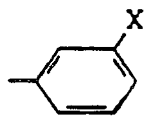 , 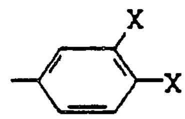 ,

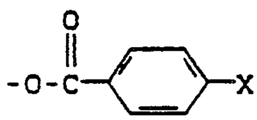 , 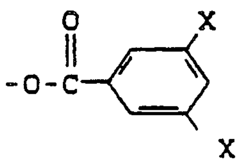 , 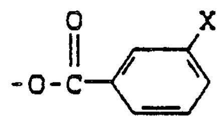 ,

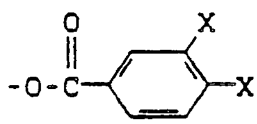 , 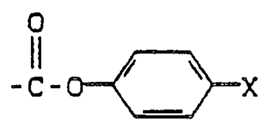 ,

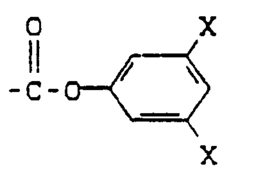 , 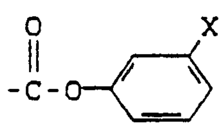 , 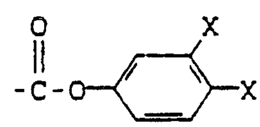

(Reste (I/a) - (I/l) entsprechend ihrer zeilenmäßigen (links → rechts) Aufeinanderfolge),
wobei X für die vorstehend für $R^1$ oder $R^2$ genannten Reste von H bis fluoriertes $C_6$-$C_{14}$-Aryl steht,
$M^1$ und $M^2$ gleich oder verschieden sind und zweibindige Reste der Formeln (I.1) bis (I.11);

$-\underset{\underset{O}{\|}}{C}-O-$, $-\underset{\underset{O}{\|}}{C}-NH-$, $-N=N-$, $-N=\underset{\underset{O}{\downarrow}}{N}-$,

$-CH=N-$, $-CH=CH-$, $-C\equiv C-$, $-O-\underset{\underset{O}{\|}}{C}-$, $-HN-\underset{\underset{O}{\|}}{C}-$, $-\underset{\underset{O}{\downarrow}}{N}=N-$ und $-N=CH-$ (I.1) - (I.11)

[entsprechend ihrer Aufeinanderfolge]
sein können
und worin
m Null, 1 oder 2,

n 1 oder 2,
o 1, 2 oder 3 und
p Null oder 1 sind, wobei im Falle von p = Null $R^2$ nur (1a), (1b), (1c) oder (1d) sein kann,
oder von Oligomeren der Formel (II) mit statistischer Verteilung der Struktureinheiten

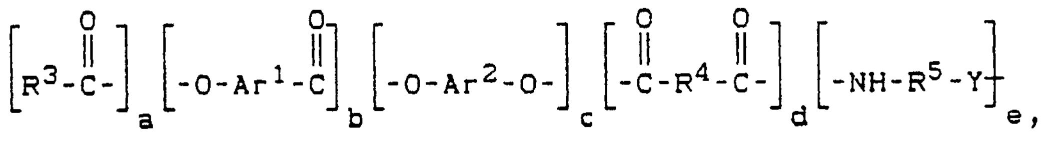

(II)

worin
$R^3$ einen Alkyl- oder einen gegebenenfalls substituierter Arylrest darstellt,
$Ar^1$ ein bivalenter, gegebenenfalls substituierter ein-oder mehrkerniger aromatischer Rest ist, wobei der mehrkernige Rest einbindig verknüpft oder annelliert sein kann,
$Ar^2$ einen bivalenten, gegebenenfalls substituierten ein oder mehrkernigen aromatischen Rest darstellt, wobei der mehrkernige Rest unterschiedlich verknüpft sein kann,
$R^4$ und $R^5$ für $C_mH_{2m}$ mit m = 0 bis 50 stehen oder die Bedeutung eines gegebenenfalls substituierten bivalenten ein- oder mehrkernigen aromatischen Rests haben, wobei der mehrkernige Rest unterschiedlich verknüpft sein kann,
Y für -O-, -CO- oder -NH- steht und im Falle der Verknüpfung mit einer Endgruppe -O- oder -NH bedeutet,
a = 2,
b = Null bis 5,
c = 1 bis 5,
d = Null bis 4 und
e = Null bis 3 sind, und worin die Endgruppen durch Strukturelemente des Typs $R^3CO$ gebildet werden.

Verbindungen der Formel (I):

Bevorzugte Reste -Ar- der Formel (I) sind die Reste (Ar1) bis (Ar4)

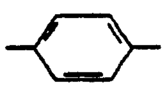 , 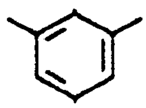 , 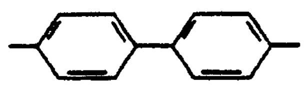 ,

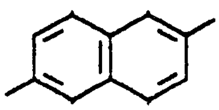

(Ar1)-(Ar4), entsprechend ihrer Reihenfolge.

Bevorzugte Reste $R^1$ und $R^2$ sind H, $CH_3$, $OCH_3$, Cyclohexyl, Phenyl, $CF_3$, $OCF_3$, fluoriertes Cyclohexyl und fluoriertes Phenyl.

Bevorzugte Reste -M- sind solche der Formeln (I.1), (I.2), (1.5), (I.8), (I.9) und (1.11).

Bevorzugte Indexkombinationen m, n, o, p und q sind
m = Null, n = 1, o = 1, p = Null;
m = Null, n = 1, o = 1, p = 1;
m = Null, n = 2, o = 1, p = 1;
m = n = o = p = 1;
m = 1, n = 1, o = 2, p = 1;
m = Null, n = 2, o = 1, p = Null;
m = 1, n = 2, o = 1, p = 1 und
m = 1, n = 1, o = 3, p = 1.

Die Verbindungen der Formel (I) zeichnen sich dadurch aus, daß sie beim Schmelzen eine flüssigkristalline Phase durchlaufen (Bezüglich flüssigkristalliner Verbindungen bzw. Phasen siehe beispielweise: D. Demus, L. Richter, Textures of Liquid Crystals, Verlag Chemie, Weinheim - New York 1978 oder

H. Kelker, R. Hatz, Handbook of Liquid Crystals Verlag Chemie, Weinheim, Deerfield 1080).

Bevorzugte Verbindungen der Formel (I) sind solche, die 3 bis 15 aromatische Teilstrukturen enthalten, wobei der Rest -Ar- als eine Teilstruktur gewählt ist, unabhängig davon, ob er einkernig oder mehrkernig ist. Besonders bevorzugte Verbindungen der Formel (I) sind solche, die 3 bis 11 aromatische Teilstrukturen enthalten, wobei wiederum der Rest -Ar- als eine aromatische Teilstruktur gewählt ist, unabhängig davon ob er einkernig oder mehrkernig ist. Ganz besonders bevorzugte Verbindungen der Formel (I) sind solche, die 3 bis 7 aromatische Teilstrukturen im vorstehend definierten Sinne haben.

Als Verbindungen der Formel (I) seien beispielsweise die folgenden vier Gruppen von Verbindungen (I,A) bis (I,D) genannt:

<u>(I,A)</u> Flüssigkristalline Verbindungen der Formel (I) mit <u>drei</u> aromatischen Teilstrukturen, <u>worin</u>
m = Null, n = 1, o = 1 und p = Null sind:

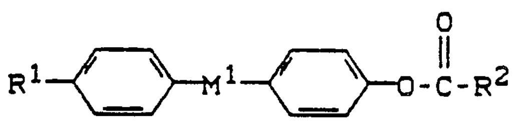 (Formel IA)

| Nr. | $R^1$ | $M^1$ | $R^2$ |
|---|---|---|---|
| 1 | $CH_3$ | 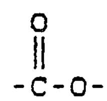 | 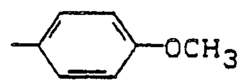 |
| 2 | $CH_3O-$ | 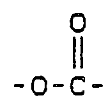 | 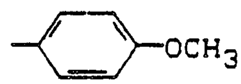 |
| 3 | $CH_3O-$ | 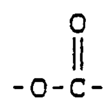 | 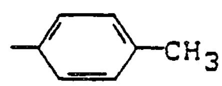 |
| 4 | $CH_3$ | 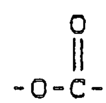 | 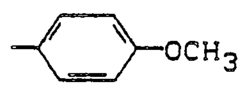 |

<u>(I,B)</u> Flüssigkristalline Verbindungen der Formel (I) mit <u>vier</u> aromatischen Teilstrukturen, worin wieder m = Null, n = 1, o = 1 und p = Null sind:

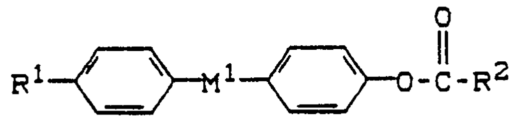 (Formel IB)

| Nr. | $R^1$ | $M^1$ | $R^2$ |
|---|---|---|---|
| | 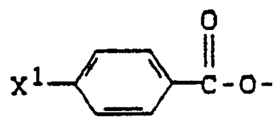 | 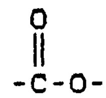 | 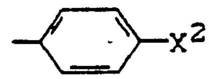 |
| 5 | $X^1=H$ | | $X^2=H$ |
| 6 | $CH_3$ | | $CH_3$ |
| 7 | $OCH_3$ | | $OCH_3$ |
| 8 | $CF_3$ | | $CF_3$ |
| 9 | Cl | | Cl |

(I,C) Flüssigkristalline Verbindungen der Formel (I) mit fünf aromatischen Teilstrukturen, worin m = n = o = p = 1 sind.

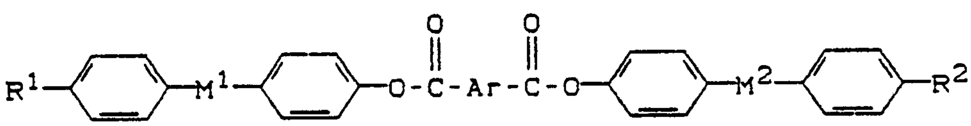

(Formel IC)

| Nr. | $R^1$ | $M^1$ | $M^2$ | $R^2$ | Ar |
|---|---|---|---|---|---|
| 10 | H | 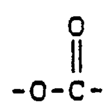 | 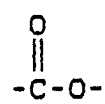 | H | 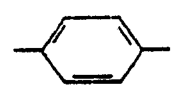 |
| 11 | $CH_3$ | " | " | $CH_3$ | " |
| 12 | $OCH_3$ | " | " | $OCH_3$ | " |
| 13 | H | 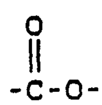 | 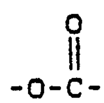 | H | " |
| 14 | $CH_3$ | " | " | $CH_3$ | " |
| 15 | $OCH_3$ | " | " | $OCH_3$ | " |

(I,D) Flüssigkristalline Verbindungen der Formel (I) mit sieben aromatischen Teilstrukturen, worin wieder m = n = o = p = 1 sind;

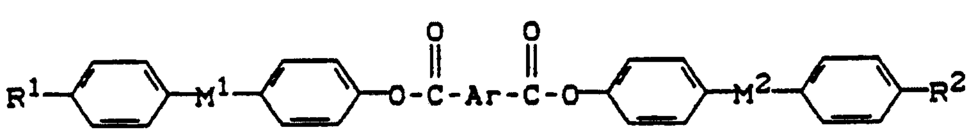

(Formel I D)

| Nr. | $R^1$ $M^1$ Ar $M^2$ $R^2$ |
|---|---|
| 16 | 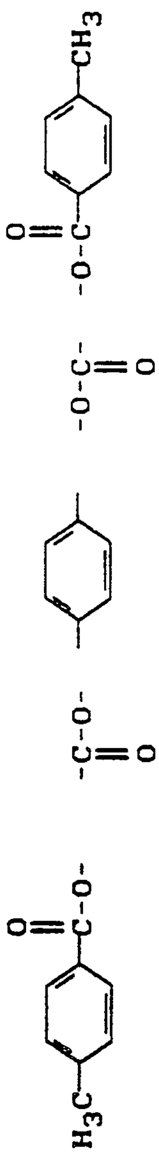 |
| 17 | 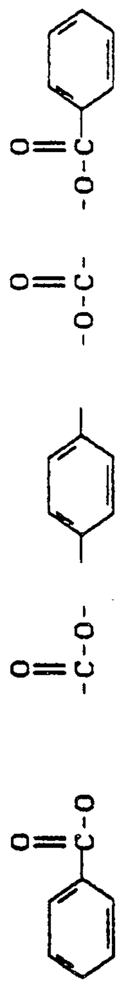 |
| 18 | 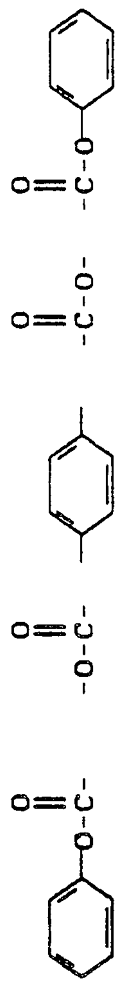 |
| 19 | 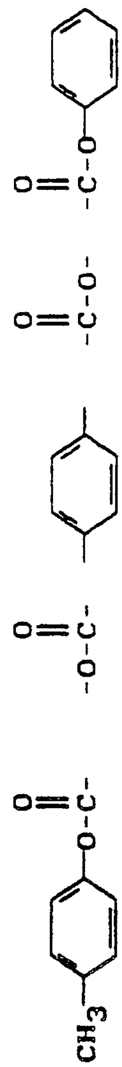 |

Verbindungen der Formel (II):

Bevorzugte Reste $R^3$ der Formel (II) sind Alkylreste mit 1 bis 30, besonders bevorzugt 1 bis 22 Kohlenstoffatomen, wie $CH_3$, $C_2H_5$, $C_3H_7$, $C_4H_9$, $C_5H_{11}$, $C_6H_{13}$, $C_{15}H_{31}$, $C_{16}H_{33}$, $C_{17}H_{35}$, $C_{18}H_{37}$, $C_{19}H_{39}$ und $C_{22}H_{45}$, bevorzugt $CH_3$,
oder aromatische Reste der Formeln (III) und (IV)

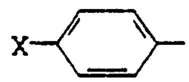

(III),

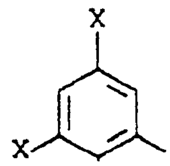

(IV),

worin
X Wasserstoff, Halogen, $NO_2$, $C_1$-$C_4$-Alkyl, $C_3$-$C_6$-Cycloalkyl, $C_6$-$C_{14}$-Aryl, O-$C_1$-$C_4$-Alkyl, O-$C_3$-$C_6$-Cycloalkyl, fluoriertes $C_1$-$C_4$-Alkyl, fluoriertes $C_3$-$C_6$-Cycloalkyl oder fluoriertes $C_6$-$C_{14}$-Aryl sein kann.

Genannt werden z.B. besonders bevorzugt aromatische Reste der Formeln (V) und (VI):

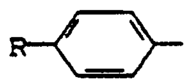

(V),

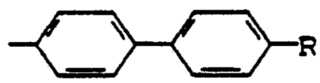

(VI),

worin
R für Wasserstoff, Halogen, wie Fluor, Chlor, $C_1$-$C_4$-Alkyl, $C_3$-$C_6$-Cycloalkyl, O-$C_1$-$C_4$-Alkyl, O-$C_3$-$C_6$-Cycloalkyl, fluoriertes $C_1$-$C_4$-Alkyl oder fluoriertes $C_3$-$C_6$-Cycloalkyl steht.

Ganz besonders bevorzugt sind solche aromatischen Reste der Formeln (V) und (VI), in denen R = Wasserstoff bedeutet.

Als bivalente aromatische Reste ($Ar^1$) der Formel (II) kommen besonders solche in Betracht, die den aromatischen Hydroxycarbonsäuren der Formeln

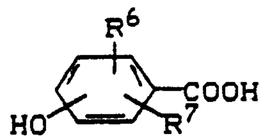

und

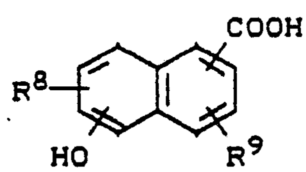

(VII) (VIII)

zugrundeliegen, worin
$R^6$ bis $R^9$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten und die Valenzen zwischen Kern und Hydroxylgruppen sowie zwischen Kern und Carboxlygruppen einen Winkel von 45 bis 180° C bilden.

Bevorzugte aromatische Hydroxycarbonsäuren sind 4-Hydroxy-3-methylbenzoesäure, 4-Hydroxy-3-phenyl-benzoesäure, 4-Hydroxy-2-ethylbenzoesäure, 3-Chlor-4-hydroxybenzoesäure, 4-Hydroxy-3-methoxybenzoesäure, 4-Hydroxybenzoesäure, 3-Hydroxybenzoesäurel, 6-Hydroxy-2-naphthoesäure. Besonders bevorzugt sind 4-Hydroxybenzoesäure, 3-Hydroxybenzoesäure und 6-Hydroxy-2-naphthoesäure.

Als bivalente aromatische Reste ($Ar^2$) der Formel (II) kommen besonders solche in Betracht, die den Diphenolen der Formel (IX)
HO-Z-OH (IX) zugrundeliegen,
worin
Z einen zweiwertigen ein- oder mehrkernigen aromatischen Rest mit 6 bis 30 C-Atomen bedeutet, wobei Z

derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl oder Azomethin, $C_1$-$C_4$-Alkylen oder -Alkyliden, Cyclohexylen oder -hexyliden oder -$O(CH_2)_nO$- mit n = 2 bis 4 verbundene Phenylenreste.

Bevorzugte Diphenole sind z.B. Hydrochinon, 4,4′-Dihydroxydiphenyl, 4,4′-Dihydroxydiphenylether, 4,4′-Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2′-Dimethyl-4,4′-dihydroxydiphenyl, 3,3′,5,5′-Tetramethyl M̄-4,4′-dihydroxydiphenyl, 3,5′-Dimethoxy-4,4′-dihydroxydiphenylether, 1,2-(2-Chlor-4-hydroxyphjenoxy)ethan, 4-Methoxy-2,6-dihydroxynaphthalin, Resorcin, 3,4′-Dihydroxydiphenyl, 3,4′-Dihydroxydiphenylether, 3,4′-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole sind Hydrochinon und 4,4′-Dihydroxydiphenyl.

Als bivalente Reste ($R^4$) der Formel (II) kommen solche in Betracht, die den Dicarbonsäuren der Formel (X)

HOOC-$R^4$-COOH (X) zugrundeliegen,

worin

$R^4$ für $C_nH_{2n}$ mit n = 0 bis 50, bevorzugt 2 bis 12 steht, oder bevorzugt

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$- mit n = 1 bis 4 verbundene Phenylenreste.

Bevorzugt sind folgende aliphatische Dicarbonsäuren: Oxalsäure, Malonsäure, Bernsteinsäure, Glutarsäure, Adipinsäure, Korksäure, Azelainsäure, Diethylmalonsäure, Trimethyladipinsäure, Sebacinsäure oder Dodecansäure und Dimerfettsäure (vom Typ Pripol®, Fa. Unichema).

Bevorzugte aromatische Dicarbonsäuren sind solche, die folgenden bivalenten Resten zugrundeliegen: 1,4-Phenylen, 1,4-Naphthylen oder 4,4′-Biphenylen, worin die beiden Bindungen sich koaxial in entgegengesetzte Richtungen erstrecken, oder 1,5-Naphthylen, 2,6-Naphthylen oder 3,5′-Biphenylen, worin die beiden in entgegengesetzte Richtungen zeigenden Bindungen parallel zueinander verschoben sind, sowie 1,3-Phenylen, 1,3-, 1,6-, 1,7- oder 2,7-Naphthylen oder 3,4′-Biphenylen, worin die beiden Bindungen nicht an benachbarten Atomen lokalisiert sind und sich nicht koaxial oder parallel verschoben in entgegengesetzte Richtungen erstrecken.

Als aromatische Dicarbonsäuren werden bevorzugt genannt: 1,4-Naphthalindicarbonsäure, 1,5-Naphthalindicarbonsäure, 2,6-Naphthalindicarbonsäure, Biphenyl-4,4′-dicarbonsäure, Bipenyl-3,3′-dicarbonsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4′-dicarbonsäure, Diphenylether-3,4′-dicarbonsäure, 4-Methylisophthalsäure, 5-Methylisophthalsäure, Diphenylether-4,4′-dichlor-3,3′-dicarbonsäure, Iso- und Terephthalsäure.

Es können sowohl ausschließlich aliphatische oder aromatische Dicarbonsäuren als auch Mischungen von beiden eingesetzt werden.

Als bivalente Reste ($R^5$) der Formel (II) kommen solche in Betracht, die den Aminoverbindungen der Formel (XI)

$H_2N$-$R^5$-Y (XI) zugrundeliegen,

worin

$R^5$ für $C_mH_{2m}$ mit m = 0 bis 20, bevorzugt 1 bis 12,

Y für OH, COOH oder $NH_2$ stehen,

oder worin

$R^5$ einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste

(vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 1 bis 4 verbundene Phenylenreste.

Bevorzugte (cyclo)aliphatische Aminocarbonsäuren sind: Aminoessigsäure, 3-Amino-propansäure, 4-Amino-butansäure, 6-Amino-hexansäure, 1,1-Aminoundecansäure sowie 4-Aminocyclohexylcarbonsäure, ganz besonders bevorzugt 4-Aminobutansäure, 6-Aminohexansäure und 11-Aminoundecansäure.

Bevorzugte (cyclo)aliphatische Diamine sind Ethylendiamin, 1,2-Diaminopropan, 1,4-Diaminobutan, 1,6-Diaminohexan, 2,5-Diamino-2,5-Dimethyl-hexan, 1,4-Diaminocyclohexan, 5-Amino-1-aminomethyl-1,3,3-trimethylcyclo hexan, 4,4′-Methylenbiscyclohexylamin, Bis-4-amino-3-methylcyclohexyl-methan, Bis-aminomethyl-hexahydro-4,7-inden, ganz besonders bevorzugt 1,4-Diaminobutan und 1,6-Diaminohexan.

Bevorzugte Aminophenole sind 3-Aminophenol, 5-Amino-2-Chlorphenol, 4-Aminophenol, 3-Amino-2-methylphenol, 3-Amino-4-Methylphenol, 5-Amino-1-naphthol, 6-Amino-1-naphthol, 8-Amino-2-naphthol, 6-Amino-2-naphthol und 4-Amino-1-hydroxy-biphenyl, ganz besonders bevorzugt 3-Aminophenol und 4-Aminophenol.

Bevorzugte aromatische Aminocarbonsäuren sind 2-Aminobenzoesäure, 3-Aminobenzoesäure, 4-Aminobenzoesäure, 4-Chloranthranilsäure, 5-Chloranthranilsäure, 3-Amino-4-chlorbenzoesäure, 4-Amino-3-phenyl-benzoesäure, 4-Amino-3-methoxybenzoesäure, 4-Amino-3-phenoxybenzoesäure, 6-Amino-5-chlor-2-naphthoesäure, 6-Amino-5-methyl-2-naphthoesäure und 6-Amino-5-methoxy-2-naphthoesäure, ganz besonders bevorzugt 3-Aminobenzoesäure, 4-Aminobenzoesäure und 6-Amino-2-naphthoesäure.

Bevorzugte aromatische Diamine sind 1,2-Diaminobenzol, 1,3-Diaminobenzol, 1,4-Diaminobenzol, 1,2-Diamino-3-methylbenzol, 1,3-Diamino-4-methylbenzol, 1,4-Diamino-2- methylbenzol, 1,3-Diamino-2-methylbenzol, 1,2-Diamino-4-methylbenzol, 1,3-Bisaminomethylbenzol, 1,4-Diaminonaphthalin, 1,5-Diaminonaphthalin, 1,8-Diaminonaphthalin, 2,7-Diaminonaphthalin, 4,4′-Diaminobiphenyl, Bis-(4-aminophenyl)-methan, 3-Methylbendizidin, 2,2′-Dimethyl-(1,1′-biphenyl)-4,4′-diamin, 3,3′-Dimethylbenzidin, 2,2-Bis-(4-aminophenyl)-propan, 1,1-Bis-(4-aminophenyl)-cyclohexan, ganz besonders bevorzugt 1,4-Diaminobenzol, 1,4-Diamino-2-methylbenzol, 2,7-Diaminonaphthalin, Bis-(4-aminophenyl)-methan, 2,2-Bis-(4-aminophenyl)-propan, 1,1-Bis-(4-aminophenyl)-cyclohexan.

Die oben genannten Aminoverbindungen können sowohl einzeln als auch in Mischung untereinander eingesetzt werden.

Bevorzugte Oligomere der Formel (II) sind solche die durchschnittlich 3 bis 25, besonders bevorzugt 4 bis 20, aromatische Teilstrukturen enthalten, wobei eine aromatische Teilstruktur wie unter Formel (I) definiert ist.

Die zuvor genannten Verbindungen der Formel (I) und (II) werden im allgemeinen in einer Menge von etwa 0,01 bis 10 Mol-%, vorzugsweise 0,1 bis 5 Mol-%, bezogen auf die Summe der Molzahlen von aromatischen Hydroxycarbonsäuren, gegebenenfalls aromatischen Aminocarbonsäuren, Diphenolen und gegebenenfalls Aminophenolen eingesetzt.

Die Herstellung der obengenannten Ester der Formel (I) kann z.B. gemäß der Lehre der Deutschen Patentanmeldung P 3 824 365.2 erfolgen, nämlich durch Umsetzung entsprechender phenolischer Verbindungen oder deren Alkalisalze mit entsprechenden reaktiven Derivaten aromatischer Carbonsäuren nach bekannten Veresterungsverfahren.

Die Herstellung der obengenannten Verbindungen der Formel (II) erfolgt nach bekannten Schmelzumesterungsverfahren, die auch zur Herstellung von thermotropen LC-Polymeren herangezogen werden (Direktveresterungsverfahren [EP-A 00 88 546], Acetatverfahren [EP-A 01 02 719, 134 204], Schmelzumesterung von Carbonsäurephenylestern mit Diphenolen (Diphenylesterverfahren) [EP-A 072 540, 070 539, 024 499, 45 499, DE-OS 20 25 971, EP 070 539 und EP 01 32 637]).

Die erfindungsgemäßen Verbindungen der Formel (II) werden besonders bevorzugt nach dem Acetat- und/oder nach dem Diphenylesterverfahren hergestellt.

Bei den bevorzugten flüssigkristallinen Polykondensaten, die aus den obengenannten Bausteinen a) bis f) aufgebaut sind, beträgt der Anteil an aromatischen Hydroxycarbonsäuren 40 bis 85 Mol-%, vorzugsweise 50 bis 80 Mol-%, der Anteil an aromatischen Aminocarbonsäure 0 bis 40 Mol-%, vorzugsweise 0 bis 25 Mol-%, der Anteil an Diphenolen 60 bis 15 Mol-%, vorzugsweise 50 bis 20 Mol-%, und der Anteil an Aminophenolen 0 bis 95 Mol-%, vorzugsweise 0 bis 20 Mol-%, bezogen auf die Summe der Bausteine a) bis d).

Die aromatischen Dicarbonsäuren sowie gegebenenfalls die Kohlensäurederivate werden in äquimolaren Mengen zu den Diphenolen und den Aminophenolen eingesetzt, also zu 60 bis 15 Mol-%, vorzugsweise 50 bis 20 Mol-%, wobei der Anteil an Carbonatgruppen bei 0 bis 40 Mol-%, vorzugsweise 0 bis 30 Mol-% im Polykondensat liegen kann.

Als aromatische Hydroxycarbonsäuren a) kommen z.B. solche Verbindungen in Frage, wie sie als

Formel (VII) und (VIII) angegeben sind.

Bevorzugte aromatische Hydroxycarbonsäuren (a) sind z.b.: 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Hydroxybenzoesäure, 6-Hydroxy-naphthoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure, 2-Hydroxybenzoesäure, 3-Hydroxy-4-methylbenzoesäure, 3-Hydroxy-4-phenylbenzoesäure, 3-Hydroxy-2-ethylbenzoesäure, 4-Chlor-3-hydroxybenzoesäure, 4-Brom-3-hydroxybenzoesäure, 3-Hydroxy-4-methoxybenzoesäure, 3-Hydroxy-4-phenoxybenzoesäure, 3-Hydroxy-2-methoxybenzoesäure und 3-Hydroxybenzoesäure, besonders bevorzugt 4-Hydroxybenzoesäure, 6-Hydroxynaphthoesäure und 3-Hydroxybenzoesäure.

Als aromatische Aminocarbonsäuren b) kommen z.B. Verbindungen der Formeln

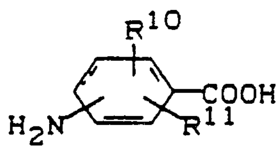

und

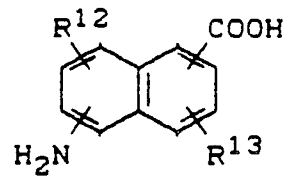

,

(XII) (XIII)

worin

$R^{10}$ bis $R^{13}$ die Bedeutung der Reste $R^6$ bis $R^9$ der Formeln (VII) und (VIII) besitzen,

in Frage.

Bevorzugte aromatische Aminocarbonsäuren sind 2-Aminobenzoesäure, 3-Aminobenzoesäure, 4-Aminobenzoesäure, 4-Chloranthranilsäure, 5-Chloranthranilsäure, 3-Amino-4-chlorbenzoesäure, 3-Amino-4-methylbenzoesäure, 4-Amino-3-methylbenzoesäure, 4-Amino-3-phenylbenzoesäure, 3-Brom-4-aminobenzoesäure, 4-Amino-3-methoxybenzoesäure, 6-Amino-2-naphthoesäure, 4-Amino-3-phenoxybenzoesäure, 6-Amino-5-chlor-2-naphthoesäure, 6-Amino-5-methyl-2-naphthoesäure, 6-Amino-5-methoxy-2-naphthoesäure und 6-Amino-4,7-dichlor-2-naphthoesäure, besonders bevorzugt 4-Aminobenzoesäure, 3-Aminobenzoesäure und 6-Amino-2-naphthoesäure.

Als Diphenole c) kommen solche der Formel

HO - Z - OH (XIV)

in Frage, worin

Z die in Formel (IX) angegebene Bedeutung hat.

Bevorzugte Diphenole c) sind z.B. Hydrochinon, 4,4′-Dihydroxydiphenyl, 4,4′-Dihydroxydiphenylether, 4,4′-Dihydroxydiphenylethan, 4,4′-Dihydroxydiphenoxyethan, 3,5′-Dihydroxydiphenyl, 3,5′-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2′-Dimethyl-4,4′-dihydroxydiphenyl, 3,3′,5,5′-Tetramethyl-4,4′-dihydroxydiphenyl, 3,5′-Dimethoxy-4,4′-dihydroxydiphenylether, 1,2-(2-Chlor-4-hydroxyphenoxy)ethan, 4-Methoxy-2,6-dihydroxynaphthalin, Resorcin, 3,4′-Dihydroxydiphenyl, 3,4′-Dihydroxydiphenylether, 3,4′-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin, besonders bevorzugt sind Hydrochinon und 4,4′-Dihydroxydiphenyl.

Als Aminophenole d) kommen solche der Formel

HO - Z - $NH_2$ (XV)

in Frage, worin

Z die in Formel (IX) angegebene Bedeutung hat.

Bevorzugte Aminophenole sind z.B.:

3-Aminophenol, 5-Amino-2-chlorphenol, 4-Aminophenol, 3- Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4-Amino-1-hydroxybiphenyl, besonders bevorzugt sind 3-Aminophenol und 4-Aminophenol.

Als aromatische Dicarbonsäuren e) kommen solche der Formel

HOOC - A - COOH (XVI)

in Frage, worin

A einen bivalenten aromatischen Rest mit 6 bis 24 C-Atomen, vorzugsweise mit 6 bis 16 C-Atomen

bedeutet,
wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$ mit n = 1 bis 4 verbundene Phenylenreste.

Bevorzugte aromatische Reste (A) sind z.B. 1,4-Phenylen, 1,4-Naphthylen oder 4,4′-Biphenylen, worin die beiden Bindungen sich koaxial in entgegengesetzte Richtungen erstrecken, oder 1,5-Naphthylen, 2,6-Naphthylen oder 3,5′-Biphenylen, worin die beiden in entgegengesetzte Richtungen zeigenden Bindungen parallel zueinander verschoben sind, sowie 1,3-Phenylen, 1,3-, 1,6-, 1,7- oder 2,7-Naphthylen oder 3,4′-Biphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren e) sind z.B. 1,4-Naphthalindicarbonsäure, 1,5-Naphthalindicarbonsäure, 2,6-Naphthalindicarbonsäure, Biphenyl-4,4′-dicarbonsäure, Biphenyl-3,3′-dicarbonsäure, Diphenoxyethan-4,4′-dicarbonsäure, Diphenylether-4,4′-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4′-dicarbonsäure, Diphenylether-3,4′-dicarbonsäure, 4-Methylisophthalsäure, 5-Methylisophthalsäure, Diphenylether-4,4′-dichlor-3,3′-dicarbonsäure, Iso- und Terephthalsäure.

Besonders bevorzugte aromatische Dicarbonsäuren e) sind Iso- und Terephthalsäure.

Als Derivate zum Einbau der Carbonatgruppen (f) seien genannt: Diarylcarbonate, wie Diphenylcarbonat, Ditolyl-carbonat, Phenyl-tolyl-carbonat und Dinaphthylcarbonat, Dialkylcarbonate, wie Diethylcarbonat, Dimethylcarbonat, Dimethyldicarbonat und Diethyldicarbonat, sowie Glykolcarbonat.

Ein bevorzugtes Derivat zum Einbau der Carbonatgruppen (f) ist Diphenylcarbonat.

Gegenstand der Erfindung ist ferner ein Verfahren zur Herstellung von flüssigkristallinen Polykondensaten auf Basis von

a) aromatischen Hydroxycarbonsäuren,
b) gegebenenfalls aromatischen Aminocarbonsäuren,
c) Diphenolen,
d) gegebenenfalls Aminophenolen,
e) aromatischen Dicarbonsäuren und
f) gegebenenfalls Kohlensäure, das dadurch gekennzeichnet ist, daß man eine Schmelzumesterung der von den Hydroxycarbonsäuren, Diphenolen und Aminophenolen abgeleiteten $C_1$ bis $C_4$-Acylester mit den Dicarbonsäuren oder eine Schmelzumesterung der Phenylester der Hydroxycarbonsäuren, gegebenenfalls Aminocarbonsäuren, Dicarbonsäuren und Kohlensäure mit den Diphenolen und gegebenenfalls Aminophenolen bei 150 bis 380° C in Gegenwart von aromatischen Estern der Formel (I) mit definierter Sequenz der Struktureinheiten

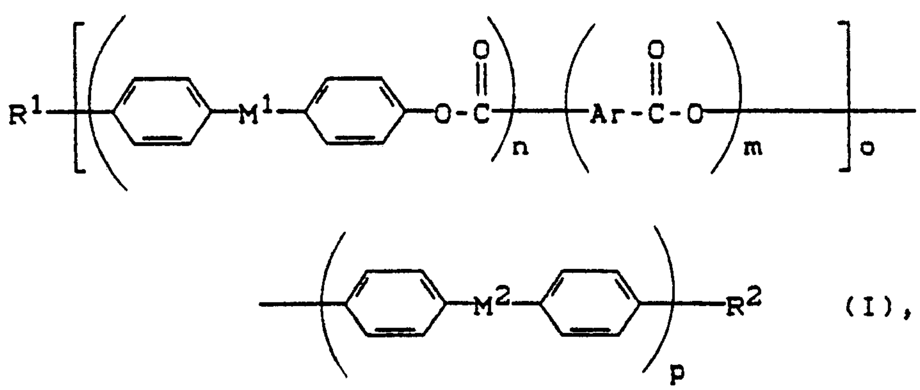

(I),

worin
Ar ein aromatischer Rest ist, der einkernig oder mehrkernig sein kann, wobei der mehrkernige Rest einbindig verknüpft oder annelliert sein kann,
$R^1$ und $R^2$ gleich oder verschieden sein können und H, Chlor, O-$C_1$-$C_4$-Alkyl, -O-$C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl, fluoriertes $C_6$-$C_{14}$-Aryl oder ein Rest der Formeln (I)/a) bis I) sind:

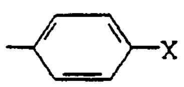 , 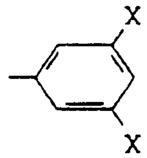 , 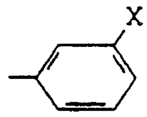 , 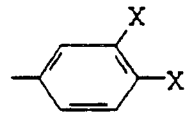 ,

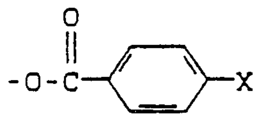 , 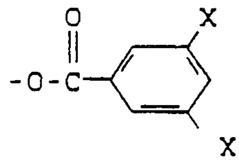 , 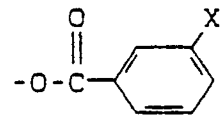 ,

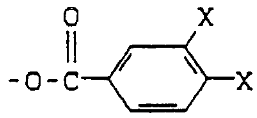 , 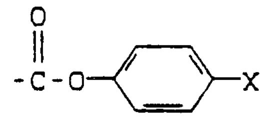 ,

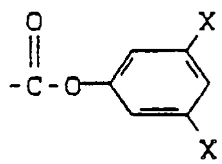 , 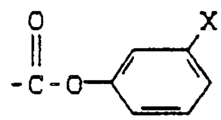 , 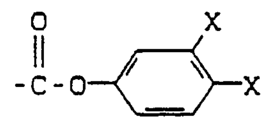

(Reste) (I/a) - (I/l) entsprechend ihrer zeilenmäßigen (links → rechts) Aufeinanderfolge), wobei

X für die vorstehend für $R^1$ oder $R^2$ genannten Reste von H bis fluoriertes $C_6$-$C_{14}$-Aryl steht,

$M^1$ und $M^2$ gleich oder verschieden sind und zweibindige Reste der Formeln (I.1) bis (I.11);

$-\underset{\underset{O}{\|}}{C}-O-$, $-\underset{\underset{O}{\|}}{C}-NH-$, $-N=N-$, $-N=\underset{\underset{O}{\downarrow}}{N}-$,

$-CH=N-$, $-CH=CH-$, $-C\equiv C-$, $-O-\underset{\underset{O}{\|}}{C}-$, $-HN-\underset{\underset{O}{\|}}{C}-$, $-\underset{\underset{O}{\downarrow}}{N}=N-$ und $-N=CH-$ (I.1) - (I.11)

(entsprechend ihre Aufeinanderfolge]
sein können
und worin
m Null, 1 oder 2,
n 1 oder 2,
o 1, 2 oder 3 und
p Null oder 1 sind, wobei im Falle von p = Null $R^2$ (1a), (1b), (1c) oder (1d) ist,
oder von Oligomeren der Formel (II) mit statistischer Verteilung der Struktureinheiten

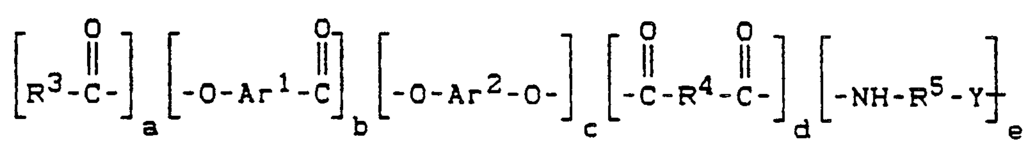

(II)

worin

$R^3$ einen Alkyl- oder einen gegebenenfalls substituierter Arylrest darstellt,

$Ar^1$ ein bivalenter, gegebenenfalls substituierter ein-oder mehrkerniger aromatischer Rest ist, wobei der mehrkernige Rest einbindig verknüpft oder annelliert sein kann,

$Ar^2$ einen bivalenten, gegebenenfalls substituierten ein- oder mehrkernigen aromatischen Rest darstellt, wobei der mehrkernige Rest unterschiedlich verknüpft sein kann,

$R^4$ und $R^5$ für $C_mH_{2m}$ mit m = 0 bis 50 stehen oder die Bedeutung eines gegebenenfalls substituierten bivalenten ein- oder mehrkernigen aromatischen Rests haben, wobei der mehrkernige Rest unterschiedlich verknüpft sein kann,

Y für -O-, -CO- oder -NH- steht und im Falle der Verknüpfung mit einer Endgruppe -O- oder -NH-bedeutet,

a = 2,

b = Null bis 5,

c = 1 bis 5,

d = Null bis 4 und

e = Null bis 3 ist, und worin die Endgruppen durch Strukturelemente des Typs $R^3CO$ gebildet werden, durchführt.

Die Schmelzumesterung der von den Hydroxycarbonsäuren und Diphenolen abgeleiteten Acylester, vorzugsweise deren Acetaten bzw. Diacetaten, mit den Dicarbonsäuren und Abspaltung von Carbonsäure bzw. Essigsäure (Acetat-Verfahren) ist u.a. beschrieben in EP 134 956 und 102 719. Die Schmelzumesterung der reaktionsfähigen Carboxylderivate, vorzugsweise der Phenylester der Hydroxycarbonsäuren und Dicarbonsäuren, mit den Diphenolen und gegebenenfalls Diphenylcarbonat (Diphenylester-Verfahren) ist beschrieben beispielsweise in EP 132 637 und 72 540.

Die reaktionsfähigen Derivate z.B. die Acetate oder Diacetate sowie die Phenylester oder Diphenylester können entweder in einem der Polykondensation vorgelagerten Reaktionsschritt getrennt hergestellt werden oder auch in situ im Reaktionsgemisch in Gegenwart der anderen Reaktionskomponenten gebildet werden.

Es ist auch zweckmäßig, sowohl die Ver- bzw. Umesterungsreaktionen als auch die Polykondensationsreaktionen katalytisch zu beschleunigen. Derartige Katalysatoren sind bekanntlich z.B. die Oxide, Hydride, Hydroxide, Halogenide, Alkoholate, Phenolate, Salze anorganischer oder organischer Säuren, die Komplexsalze oder Mischsalze der Alkalimetalle, z.B. Lithium, Natrium oder Kalium, der Erdalkalimetalle, z.B. Magnesium oder Calcium, der Nebengruppenelemente, z.B. Vanadium, Titan, Mangan, Cobalt, Nickel, Zink, Lanthan, Cer oder Zirkonium oder deren Elemente aus anderen Gruppen des Periodensystems, z.B. Germanium, Zinn, Blei oder Antimon, oder auch die Alkalimetalle oder Erdalkalimetalle selbst, insbesondere Natrium, Natriumhydroxid, Lithium-, Natrium-, Kalium-, Calcium-, Magnesium-, Cobalt-, Zinkacetat, Calciumbnzoat, Magnesiumacetylacetonat, Zinkacetylacetonat, Titantetrabutylat, Titantetrapropylat, Zirkoniumbutylat, Zirkoniumpropylat, Titantetraphenolat, Natriumphenolat, Germaniumdioxid, Antimontrioxid, Dibutylzinn-diacetat, Dibutyldimethoxy-zinn, vorzugsweise Alkylzinncarboxylate, Alkalicarboxylate, wie Benzoesäure-K-Salz, p-Hydroxybenzoesäure-K-Salz oder Imidazol.

Die Katalysatormengen betragen üblicherweise ca. 0,001 bis 1, bevorzugt 0,01 bis 0,2 Gew.-%, bezogen auf das Gesamtgewicht der eingesetzten Monomeren.

Die erfindungsgemäßen flüssigkristallinen Polykondensate können bei Temperaturen von ca. 150 bis 380 °C hergestellt werden, wobei man im allgemeinen die Reaktion bei niedrigen Temperaturen beginnt und im Verlaufe der Reaktionsfortschreitung die Temperatur kontinuierlich erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Bei der Herstellung der erfindungsgemäßen flüssigkristallinen Polykondensate kann die Zugabe der Ester der Formeln (I) und (II) bis zum Erreichen eines Abspaltungsgrades von 95 % an flüchtigem Polykondensationsprodukt zu jedem beliebigen Zeitpunkt erfolgen. Vorzugsweise werden die flüssigkristallinen Verbindungen zu Beginn bei der Einwaage der Monomerbausteine zugegeben.

Mit steigender Konzentration an eingesetzten Estern sinkt das Molekulargewicht und damit die Schmelz- und Lösungsviskosität der thermotropen Polykondensate. Die erfindungsgemäßen thermotropen Polykondensate zeichnen sich aufgrund blockierter Kettenenden durch eine erhöhte thermische Stabilität und eine ausgezeichnete Schmelzviskositätsstabilität unter Verarbeitungsbedingungen aus.

Die Ester der Formel (I) und (II) werden bei dem erfindungsgemäßen Verfahren in der zuvor beschriebenen Menge zugesetzt.

Mit in der Literatur beschriebenen Kettenabbrechern bzw. Endverkappungsagenzien war es nicht möglich, thermotrope Polykondensate mit vergleichbarem Stabilitätsgrad zu erhalten. Dies gilt auch für den Einsatz der monomeren Bausteine, aus denen die einzusetzenden Ester synthetisiert wurden.

Die erfindungsgemäßen flüssigkristallinen Polykondensate können leicht aus der Schmelze in üblicher Weise zu Formkörpern, Folien, Fasern und Filamenten verarbeitet werden.

## Beispiele

- Herstellung der erfindungsgemäß eingesetzten Ester der Formel (I)

- Herstellung der erfindungsgemäßen flüssigkristallinen Polykondensate in Gegenwart der Ester der Formel (I)

I. Herstellung der Ester der Formel (I)

4-Hydroxyphenyl-4-hydroxybenzoat wird hergestellt:

a) aus 4-Hydroxybenzoesäure und Einführung der Carbobenzoxygruppe als Schutzgruppe und Veresterung mit Hydrochinon nach Schotten-Baumann und anschließende Schutzgruppenabspaltung
Lit.: W.R. Krigbaum, Eur. Polym. J. 20, S. 225 (1984)
Schmp.: 245-246° C

b) durch Direktveresterung analog DE 3 622 611:
138,1 g 4-Hydroxybenzoesäure und 110,1 g Hydrochinon werden zusammen mit 2 g Borsäure und 2,5 g Schwefelsäure in 900 ml Xylol suspendiert und bis zum nde der Wasserabspaltung unter Rückfluß erhitzt. Das Produkt wird abgesaugt, getrocknet und mit verdünnter Na-Bicarbonat-Lösung gewaschen, erneut getrocknet und in 500 ml Aceton gelöst. Es wird heiß vom ungelösten filtriert und das Produkt aus Wasser gefällt, abgesaugt und getrocknet.
Ausbeute: 182 g
Schmp.: 245-247° C

Beispiel 1

4-(4-Methylbenzoyloxy)-benzoesäure-4-(4-methylbenzoyloxy)-phenylester

345,3 g 4-Hydroxyphenyl-4-hydroxybenzoat werden mit 249 g Pyridin in 3000 ml Methylenchlorid suspendiert und bei T = 0° C innerhalb von 3 h mit 460 g Methylbenzoesäurechlorid versetzt. Das Reaktionsgemisch wird bei Raumtemperatur 14 h nachgerührt. Das Lösungsmittel wird im Vakuum abdestilliert und der Rückstand mit 1,4 l 5 %iger Salzsäure aufgeführt. Das unlösliche Produkt wurde abgesaugt, mit Wasser neutral gewaschen und getrocknet.
Ausbeute: 643 g (85 % d. Th.)
Im Bereich von 190 bis 350° C kann unter dem Polarisationsmikroskop eine flüssigkristalline Phase festgestellt werden.

Beispiel 2

4-Benzoyloxybenzoesäure-4-benzoyloxyphenylester wird aus 4-Hydroxyphenyl-4-hydroxybenzoat und Benzoesäurechlorid nach der Vorschrift aus Beispiel 1 hergestellt.
Ausbeute: 530 g (80 % d. Th.)
Im Bereich zwischen 190 und 350° C wurde mittels Polarisationsmikroskopie eine flüssigkristalline Phase festgestellt.

Beispiel 3

4-(4-Methoxybenzoyloxy)benzoesäure-4-(4-methoxybenzoyloxy)-phenylester wird aus 4-Hydroxyphenyl-4-hydroxybenzoat und 4-Methoxybenzoesäurechlorid nach der Vorschrift des Beispiels 1 hergestellt.
Ausbeute: 420 g (84 % d. Th.)
Im Bereich zwischen 180 bis 330° C wurde mittels Polarisationsmikroskopie das Vorliegen einer flüssigkristallinen Phase festgestellt.

Herstellung von LC-Oligomeren der Formel II durch Schmelzumsetzung

Beispiel 4

In einem Reaktionsgefäß mit Rührer, Kolonne und Destillierbrücke werden

| | |
|---|---|
| 276,0 g | p-Hydroxybenzoesäure |
| 220,0 g | Hydrochinon |
| 488,0 g | Benzoesäure |
| 0,8 g | Magnesium und |
| 624,2 g | Acetanhydrid eingewogen. |

Be einer Innentemperatur von 160°C begann die Abspaltung der Essigsäure. Mit nachlassender Destillationsgeschwindigkeit wurde die Reaktionstemperatur langsam auf 250°C erhöht.

Nach Beendigung der Destillation wurde der Druck im Verlauf von 30 min bis auf 1 mbar gesenkt. Während der Vakuumphase wurden restliche Mengen von Essigsäure im Verlauf von 2h abgespalten.

Das Produkt wurde in einer Weißblechdose abgefüllt und nach dem Erkalten zerkleinert.

Auseute: 876 g

Im Bereich zwischen 190 und 350°C wurde mittels Polarisationsmikroskopie eine flüssigkristalline Phase festgestellt.

Beispiel 5

Analog zur Vorschrift in Beispiel 4 werden

| | |
|---|---|
| 193,2 g | p-Hyroxybenzoesäure |
| 260,4 g | 4,4′-Dihydroxydiphenyl |
| 341,6 g | Benzoesäure |
| 0,07 g | Magnesium und |
| 437,0 g | Acetanhydrid eingewogen und umgesetzt. |

Im Bereich von 180 bis 320°C wurde mittels Polarisationsmikroskopie eine flüssigkristalline Phase festgestellt.

Beispiel 6

Analog zur Vorschrift in Beispiel 4 werden

| | |
|---|---|
| 207,0 g | p-Hyroxybenzoesäure |
| 165,0 g | Hydrochinon |
| 166,0 g | Isophthalsäure |
| 122,0 g | Benzoesäure |
| 0,06 g | Magnesium und |
| 468,0 g | Acetanhydrid eingewogen und umgesetzt. |

Ausbeute: 560 g

Im Bereich von 220 bis 320°C wurde mittels Polarisationsmikroskopie eine flüssigkristalline Phase festgestellt.

II. Herstellung der LC-Polykondensate

Beispiel 7 Polyestercarbonat

In einem Reaktionsgefäß mit Rührer, Kolonne und Destillierbrücke wurden

| | |
|---|---|
| 328,73 g | p-Hydroxybenzoesäure |
| 107,91 g | Hydrochinon |
| 26,07 g | 4,4′-Dihydroxydiphenyl |
| 17,44 g | Terephthalsäure |
| 772,26 g | Diphenylcarbonat |
| 0,1 g | Magnesiumoxid eingewogen sowie verschiedene Mengen der in Tabelle 1 und 2 genannten Kettenabbrecher. |

verschiedene Mengen der in Tabelle 1 und 2 genannten Kettenabbrecher.

Bei einer Innentemperatur von 160 °C begann die $CO_2$-Abspaltung. Die Innentemperatur wurde im Verlauf von 15 Min. auf 180 °C erhöht, 60 Min. konstant gehalten, auf 220 °C erhöht und bis zum Ende der $CO_2$-Abspaltung konstant gehalten.

Das Reaktionsgemisch wurde auf 250 °C aufgeheizt und der Druck im Reaktor schrittweise bis auf 30 mbar erniedrigt. Nach 1 h hatte die Destillationsgeschwindigkeit soweit nachgelassen, daß die Innentemperatur auf 275 °C und anschließend 300 °C erhöht werden konnte. Nachdem die Phenolabspaltung weitgehend abgeschlossen war, wurde der Druck im Reaktor auf 0,2 mbar reduziert. Nach 1 h unter diesen Kondensationsbedingungen war die Reaktion beendet.

Produktbeschreibung: hochviskos, sehr starke Faserstruktur

Produktfarbe: beige

In Tabelle 1 und 2 sind die in Gegenwart verschiedener Kettenabbrecher (Endverkappungsagentien) hergestellten LC-Polyestercarbonate zusammengefaßt.

Die Vergleiche mit anderen monofunktionellen Verbindungen sowie mit Phenylbenzoat zeigen deutlich die gute Wirksamkeit der erfindungsgemäßen Kettenabbrecher.

Tabelle 1

| (Kettenabbrecher der Formel I) | | | |
|---|---|---|---|
| Ester aus Beispiel Nr. | Konz. Mol-% | $\eta_{rel}$ 1) | TGA 2) % |
| - | - | 3,38 | 1,8 |
| 1 | 0,2 | 3,15 | 1,1 |
| 1 | 0,4 | 2,96 | 0,9 |
| 1 | 1,0 | 2,19 | 0,9 |
| 1 | 2,0 | 1,58 | 0,7 |
| 2 | 0,2 | 3,21 | 0,8 |
| 2 | 0,4 | 2,99 | 0,6 |
| 2 | 1,0 | 2,23 | 0,5 |
| 2 | 2,0 | 1,63 | 0,5 |
| Vergleichsbeispiele: 4-Hydroxybiphenyl | 0,2 | 3,28 | 2,3 |
| | 0,4 | 2,95 | 3,0 |
| | 1,0 | 3,15 | 1,9 |
| | 2,0 | 3,07 | 2,6 |
| Biphenylcarbonsäure | 0,2 | 3,31 | 3,1 |
| | 0,4 | 3,07 | 2,8 |
| | 1,0 | 3,14 | 2,5 |
| | 2,0 | 3,08 | 3,4 |
| Phenylbenzoat | 0,2 | 3,28 | 3,5 |
| | 0,4 | 3,18 | 2,8 |
| | 1,0 | 3,19 | 3,1 |
| | 2,0 | 3,25 | 3,0 |

1) gemessen in p-Chlorphenol, 60° C, 0,5 g/dl/Lösungsviskosität
2) Thermogravimetrische Analyse/1 h bei 350° C, $N_2$

Tabelle 2

| (Kettenabbrecher der Formel II) | | | |
|---|---|---|---|
| Ester aus Beispiel Nr. | Konz. Mol-% | $\eta_{rel}$ 1) | TGA 2) % |
| 4 | 0,5 | 2,77 | 0,8 |
| 4 | 1,0 | 2,11 | 0,5 |
| 4 | 2,0 | 1,57 | 0,4 |
| 5 | 0,5 | 2,81 | 0,7 |
| 5 | 1,0 | 2,25 | 0,4 |
| 5 | 2,0 | 1,65 | 0,4 |

1) gemessen in p-Chlorphenol, 60° C, 0,5 g/dl/Lösungsviskosität
2) Thermogravimetrische Analyse/1 h bei 350° C, $N_2$

Beispiel 8: Polyester

In ein 1 l-Planschliffgefäß mit Planschliffdeckel, Rührer, Stickstoffeinleitung und einem Destillationsaufsatz, der mit einem Kühler verbunden war, wurden

| | |
|---|---|
| 287,29 g | p-Hydroxybenzoesäure |
| 105,71 g | Hydrochinon |
| 29,79 g | 4,4-Dihydroxydiphenyl |
| 26,58 g | Terephthalsäure |
| 186,07 g | Isophthalsäure |
| 449,85 g | Acetanhydrid sowie |
| 0,1 g | Magnesiumacetat (wasserfrei) und |
| 0,15 g | Antimontrioxid eingewogen sowie |

verschiedene Mengen der in Tab. 3 und 4 genannten Kettenabbrecher.

Unter Stickstoffatmosphäre wurde mittels Salzbad auf 170 °C erhitzt. Sobald die Destillation von Essigsäure nachließ (nach ca. 45 Min.), wurde die Temperatur im Reaktionsgefäß im Verlauf einer Stunde auf 250 °C und im Verlauf einer weiteren Stunde auf 330 °C erhöht. Nach Beendigung der Destillation wurde der Druck im Verlauf von 30 Min. bis auf ca. 1 mbar gesenkt.
Während der Vakuumphase nahm die Viskosität der entstandenen Polymerschmelze stark zu. Die Schmelze wurde daher langsamer gerührt. Am Ende dieser Phase war die Gesamtmenge an Essigsäure (enthält restliches Acetanhydrid) aufgefangen worden.
Produktbeschreibung: hellbeige, hochviskos, starke Faserstruktur.

In Tabelle 3 und 4 sind die in Gegenwart verschiedener Kettenabbrecher (Endverkappungsagentien) hergestellten LC-Polyester zusammengefaßt.

Tabelle 3

| (Kettenabbrecher der Formel I) | | | |
|---|---|---|---|
| Ester aus Beispiel | Konz. Mol-% | $\eta_{rel}$ 1) | TGA 2) % |
| - | - | 2,87 | 1,1 |
| 1 | 0,2 | 2,78 | 0,8 |
| 1 | 0,4 | 2,58 | 0,7 |
| 1 | 1,0 | 2,24 | 0,7 |
| 1 | 2,0 | 1,30 | 0,6 |
| 2 | 0,2 | 2,79 | 0,7 |
| 2 | 0,4 | 2,61 | 0,7 |
| 2 | 1,0 | 2,28 | 0,6 |
| 2 | 2,0 | 1,35 | 0,7 |
| Vergleichsbeispiele 4-Hydroxybiphenyl | 0,2 | 2,81 | 1,2 |
| | 0,4 | 2,79 | 1,3 |
| | 1,0 | 2,75 | 1,2 |
| | 2,0 | 2,78 | 1,5 |
| Biphenylcarbonsäure | 0,2 | 2,80 | 1,2 |
| | 0,4 | 2,81 | 1,4 |
| | 1,0 | 2,76 | 1,4 |
| | 2,0 | 2,75 | 1,4 |
| Phenylbenzoat | 0,2 | 2,83 | 1,3 |
| | 0,4 | 2,82 | 1,7 |
| | 1,0 | 2,78 | 1,9 |
| | 2,0 | 2,81 | 2,1 |

1) p-Chlorphenol, 60 °C, 0,5 g/dl
2) 1 h bei 350 °C, $N_2$

Tabelle 4

| (Kettenabbrecher der Formel II) | | | |
|---|---|---|---|
| Ester aus Beispiel | Konz. Mol-% | $\eta_{rel}$ 1) | TGA 2) % |
| 4 | 0,5 | 2,50 | 0,7 |
| 4 | 1,0 | 2,20 | 0,5 |
| 4 | 2,0 | 1,38 | 0,3 |
| 5 | 0,5 | 2,47 | 0,75 |
| 5 | 1,0 | 2,15 | 0,5 |
| 5 | 2,0 | 1,34 | 0,4 |
| 6 | 0,5 | 2,58 | 0,6 |
| 6 | 1,0 | 2,29 | 0,5 |
| 6 | 2,0 | 1,46 | 0,3 |

1) p-Chlorphenol, 60 °C, 0,5 g/dl
2) 1 h bei 350 °C, $N_2$

Vergleichbare gute Resultate hinsichtlich Lösungsviskosität (Molgewichtsregelung) und thermischer Stabilität (TGA) werden auch mit den anderen erfindungsgemäßen Verbindungen der Formeln I und II erzielt.

Die verbesserte Viskositätsstabilität der erfindungsgemäßen flüssigkristallinen Polykondensate läßt sich durch einen Langzeit-Temperversuch demonstrieren.

Dazu wird ein flüssigkristalliner Polyester aus Beispiel 8 in Gegenwart von Biphenyl-4-carbonsäure und 2. in Gegenwart des Additivs 4 (0,5 Mol) (Beispiel 4) hergestellt, bei 320 °C in der Schmelze getempert und die Schmelzviskosität in Abhängigkeit der Zeit bestimmt.

Die Fließkurven der beiden Produkte nach einer Standzeit von 4h bei 320 °C sind in Abb. 1 dargestellt.

Ein Vergleich der beiden Produkte zeigt deutlich die überlegene Viskositätsstabilität des in Gegenwart der Verbindung II hergestellten LC-Polymeren gegenüber dem Produkt, das einen monofunktionellen Kettenabbrecher, wie Biphenyl-4-carbonsäure, enthält.

Abb. 1: Schmelzviskosität von Polykondensaten, gemessen nach 4h Standzeit bei 320° C

Herstellung

a) mit 0,5 Mol % Biphenyl-4-carbonsäure

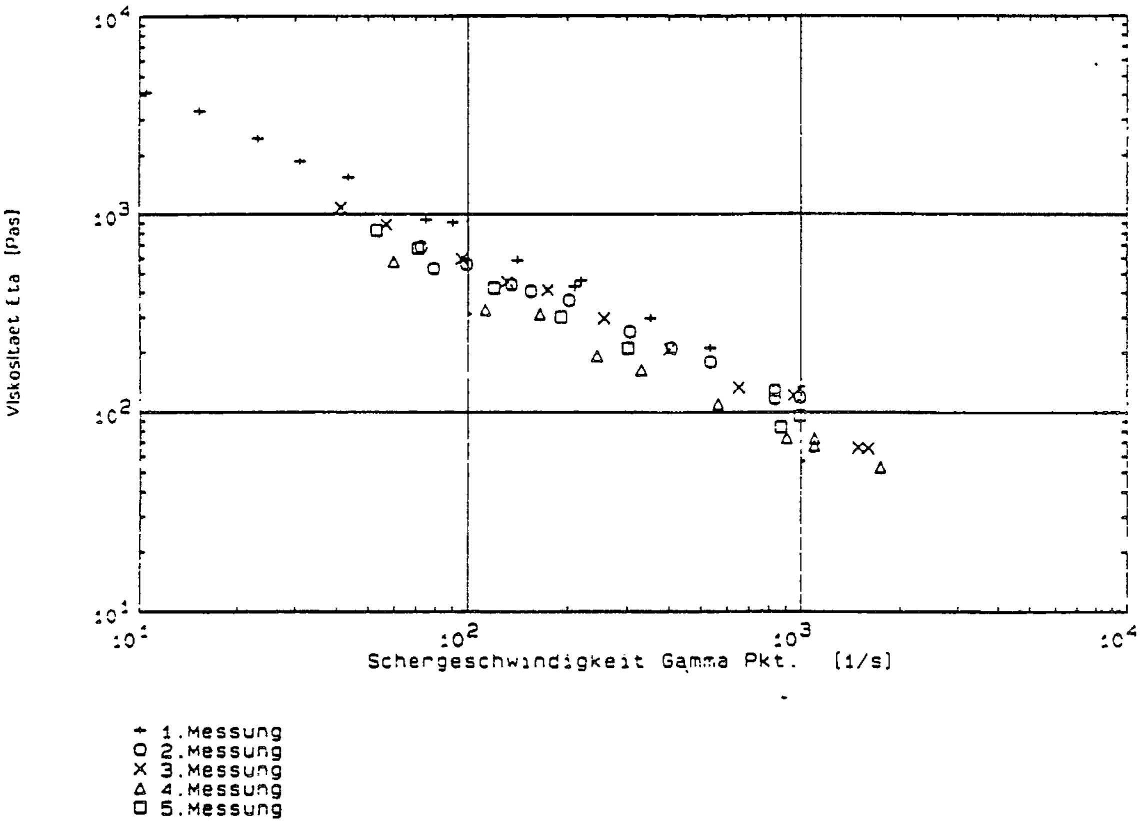

b) mit 0,5 Mol-% Verbindung der Formel II aus Beispiel 4

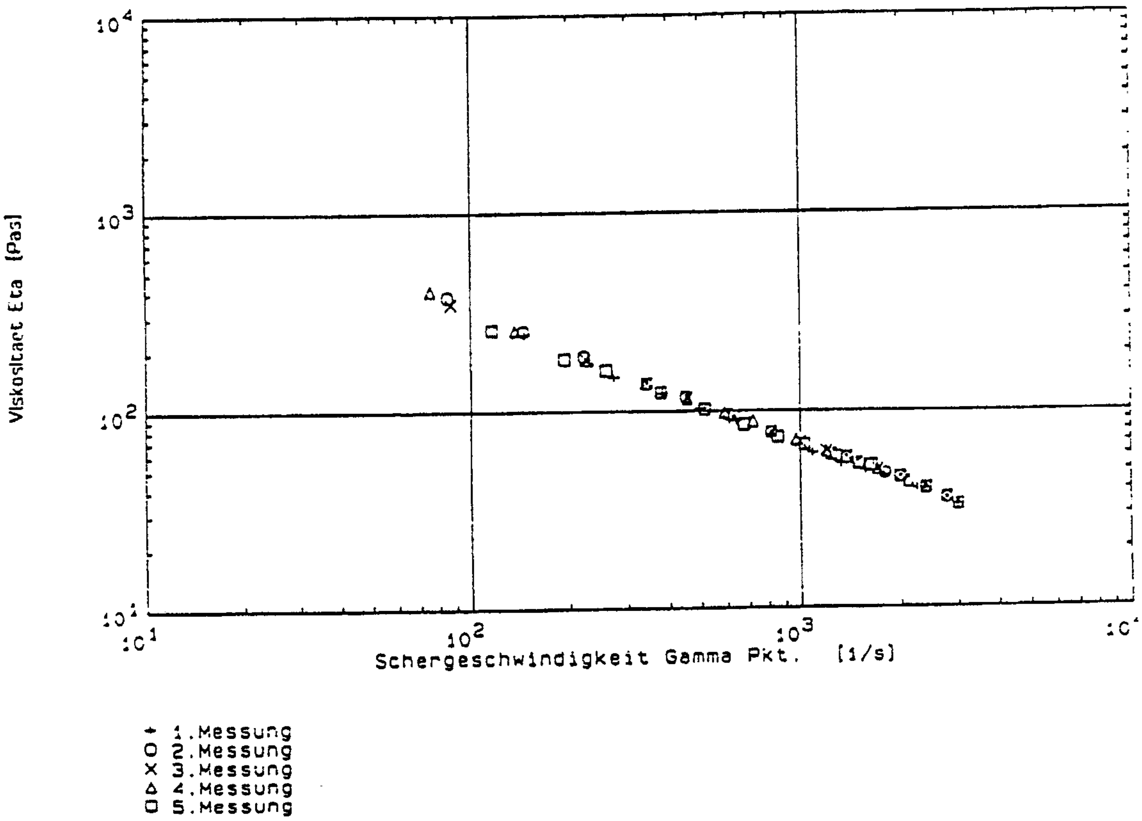


## Ansprüche

1. Flüssigkristalline Polykondensate auf Basis von
a) aromatischen Hydroxycarbonsäuren
b) gegebenenfalls aromatischen Aminocarbonsäuren
c) Diphenolen
d) gegebenenfalls Aminophenolen
e) aromatischen Dicarbonsäuren und
f) gegebenenfalls Kohlensäure
erhältlich durch Schmelzumesterung der von den Hydroxycarbonsäuren, Diphenolen und Aminophenolen abgeleiteten $C_1$ bis $C_4$-Acylester mit den Dicarbonsäuren oder durch Schmelzumesterung der Phenylester der Hydroxycarbonsäuren, gegebenenfalls Aminocarbonsäuren, Dicarbonsäuren und Kohlensäure mit den Diphenolen und gegebenenfalls Aminophenolen bei 150 bis 380 °C in Gegenwart von aromatischen Estern der Formel (I) mit definierter Sequenz der Struktureinheiten

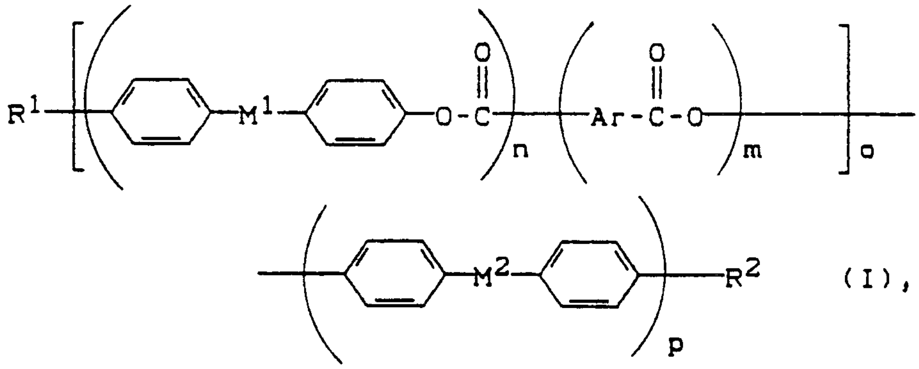

(I),

worin
Ar ein aromatischer Rest ist, der einkernig oder mehrkernig sein kann, wobei der mehrkernige Rest einbindig verknüpft oder annelliert sein kann, R' und $R^2$ gleich oder verschieden sein können und H, Chlor, O-$C_1$-$C_4$-Alkyl, -O-$C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl, fluoriertes $C_6$-$C_{14}$-Aryl oder ein Rest der Formeln (I)/ a) bis l) sind:

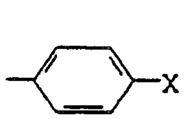 , 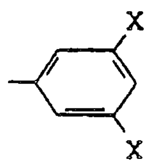 , 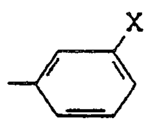 , 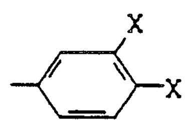 ,

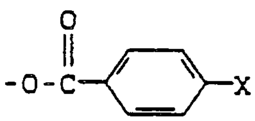 , 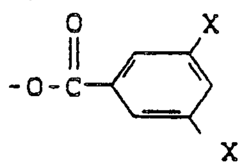 , 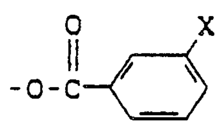 ,

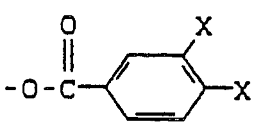 , 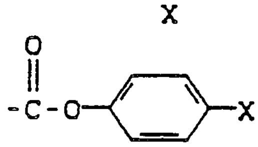 ,

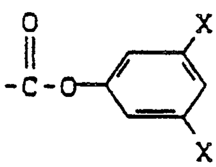 , 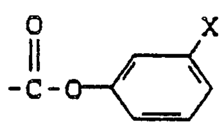 , 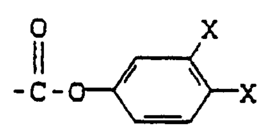

(Reste (I/a) - (I/l) entsprechend ihrer zeilenmäßigen (links→rechts) Aufeinanderfolge),
wobei
X für die vorstehend für $R^1$ oder $R^2$ genannten Reste von H bis fluoriertes $C_6$-$C_{14}$-Aryl steht,
$M^1$ und $M^2$ gleich oder verschieden sind und zweibindige Reste der Formeln (I.1) bis (I.11) sein können:

$-\underset{\underset{O}{\|}}{C}-O-$, $-\underset{\underset{O}{\|}}{C}-NH-$, $-N=N-$, $-\underset{\underset{O}{\downarrow}}{N}=N-$,

$-CH=N-$, $-CH=CH-$, $-C\equiv C-$, $-O-\underset{\underset{O}{\|}}{C}-$, $-HN-\underset{\underset{O}{\|}}{C}-$, $-\underset{\underset{O}{\downarrow}}{N}=N-$ und $-N=CH-$ (I.1) - (I.11)

[entsprechend ihrer Aufeinanderfogle]
und worin
m Null, 1 oder 2,
n 1 oder 2,
o 1, 2 oder 3 und
p Null oder 1 sind, wobei im Falle von p = Null $R^2$ nur (1a), (1b), (1c) oder (1d) sein kann,

oder von Oligomeren der Formel (II) mit statistischer Verteilung der Struktureinheiten

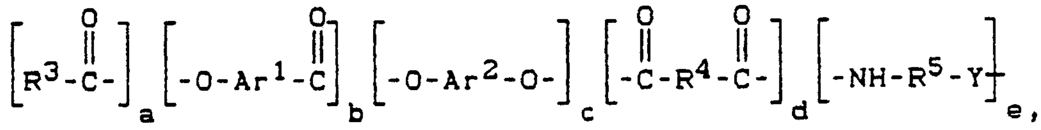

(II)

worin
$R^3$ einen Alkyl- oder ein gegebenenfalls substituierten Arylrest darstellt,
$Ar^1$ ein bivalenter, gegebenenfalls substituierter ein-oder mehrkerniger aromatischen Rest ist, wobei der mehrkernige Rest einbindig verknüpft oder annelliert sein kann,
$Ar^2$ einen bivalenten, gegebenenfalls substituierten ein- oder mehrkernigen aromatischen Rest darstellt, wobei der mehrkernige Rest unterschiedlich verknüpft sein kann,
$R^4$ und $R^5$ für $C_mH_{2m}$ mit m = 0 bis 50 stehen oder die Bedeutung eines gegebenenfalls substituierten bivalenten ein- oder mehrkernigen aroamtischen Rests haben, wobei der mehrkernige Rest unterschiedlich verknüpft sein kann,
Y für -O-, -CO- oder -NH- steht und im Falle der Verknüpfung mit einer Endgruppe -O- oder -NH-bedeutet,
a = 2,
b = Null bis 5,
c = 1 bis 5,
d = Null bis 4 und
e = Null bis 3 sind
und worin die Endgruppen durch Strukturelemente des Typs $R^3CO$ gebildet werden.

2. Verfahren zur Herstellung von flüssigkristallinen Polykondensaten auf Basis von
a) aromatischen Hydroxycarbonsäuren,
b) gegebenenfalls aromatischen Aminocarbonsäuren,
c) Diphenolen,
d) gegebenenfalls Aminophenolen,
e) aromatischen Dicarbonsäuren und
f) gegebenenfalls Kohlensäure,
dadurch gekennzeichnet, daß man eine Schmelzumesterung der von den Hydroxycarbonsäuren, Diphenolen und Aminophenolen abgeleiteten $C_1$ bis $C_4$-Acylester mit den Dicarbonsäuren oder eine Schmelzumesterung der Phenylester der Hydroxycarbonsäuren, gegebenenfalls Aminocarbonsäuren, Dicarbonsäuren und Kohlensäure mit den Diphenolen und gegebenenfalls Aminophenolen bei 150 bis 380 °C in Gegenwart von aromatischen Estern der Formel (I) mit definierter Sequenz der Struktureinheiten

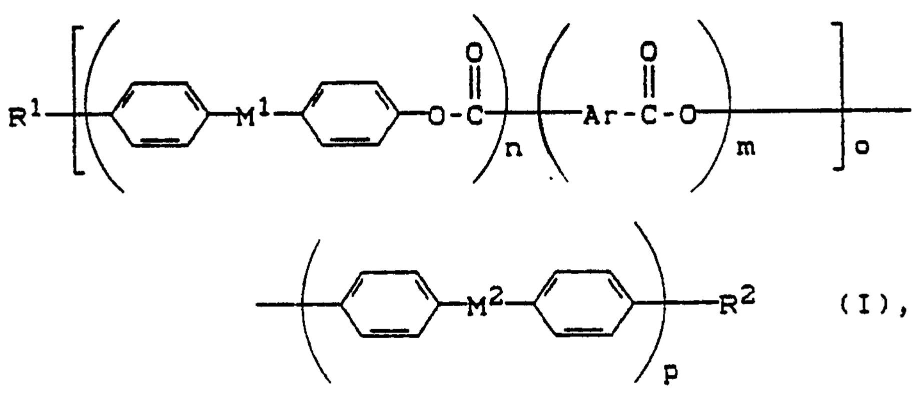

(I),

worin
Ar ein aromatischer Rest ist, der einkernig oder mehrkernig sein, wobei der mehrkernige Rest einbindig verknüpft oder annelliert sein kann,
$R^1$ und $R^2$ gleich oder verschieden sein können und H, Chlor, O-$C_1$-$C_4$-Alkyl, -O-$C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl,

fluoriertes $C_6$-$C_{14}$-Aryl oder ein Rest der Formeln (I)/a) bis I) sind:

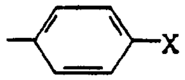 , 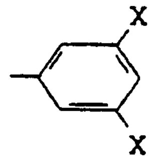 , 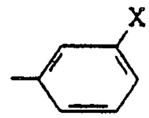 , 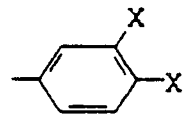 ,

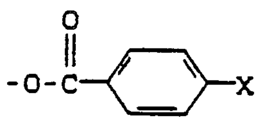 , 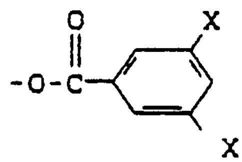 , 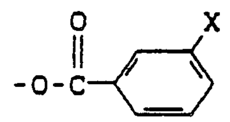 ,

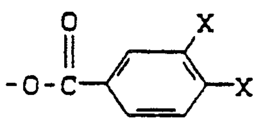 , 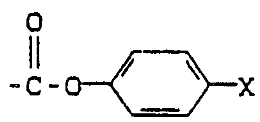 ,

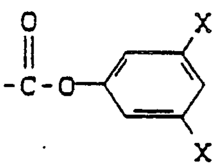 , 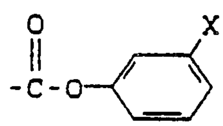 , 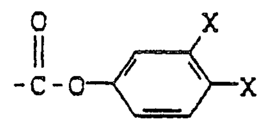

(Reste (I/a)-(I/l) entsprechend ihrer zeilenmäßigen (links→rechts) Aufeinanderfolge),
wobei
X für die vorstehend für $R^1$ oder $R^2$ genannten Reste von H bis fluoriertes $C_6$-$C_{14}$-Aryl steht,
$M^1$ und $M^2$ gleich oder verschieden sind und zweibindige Reste der Formeln (I.1) bis (I.11) sein können:

$-\underset{O}{\underset{\|}{C}}-O-$, $-\underset{O}{\underset{\|}{C}}-NH-$, $-N=N-$, $-N=\underset{O}{\underset{\downarrow}{N}}-$,
$-CH=N$, $-CH=CH-$, $-C\equiv C-$, $-O-\underset{O}{\underset{\|}{C}}-$, $-HN-\underset{O}{\underset{\|}{C}}-$, $-\underset{O}{\underset{\downarrow}{N}}=N-$ und $-N=CH-$ (I.1) - (I.11)

[entsprechend ihrer Aufeinanderfolge]
und worin
m Null, 1 oder 2,
n 1 oder 2,
o 1, 2 oder 3 und
p Null oder 1 sind, wobei im Falle von p = Null $R^2$ nur (1a), (1b), (1c) oder (1d) sein kann,
oder von Oligomeren der Formel (II) mit statistischer Verteilung der Struktureinheiten

$$\left[R^3-\overset{O}{\overset{\|}{C}}-\right]_a \left[-O-Ar^1-\overset{O}{\overset{\|}{C}}\right]_b \left[-O-Ar^2-O-\right]_c \left[-\overset{O}{\overset{\|}{C}}-R^4-\overset{O}{\overset{\|}{C}}-\right]_d \left[-NH-R^5-Y-\right]_e ,$$

(II)

worin
$R^3$ einen Alkyl- oder einen gegebenenfalls substituierten Arylrest darstellt,
$Ar^1$ ein bivalenter, gegebenenfalls substituierter ein- oder mehrkerniger aromatischen Rest ist, wobei der mehrkernige Rest einbindig verknüpft oder annelliert sein kann,
$Ar^2$ einen bivalenten, gegebenenfalls substituierten ein- oder mehrkerniger aromatischen Rest darstellt,

wobei der mehrkernige Rest unterschiedlich verknüpft sein kann,
$R^4$ und $R^5$ für $C_mH_{2m}$ mit m = 0 bis 50 stehen oder die Bedeutung eines gegebenenfalls substituierten bivalenten ein- oder mehrkernigen aromatischen Rest haben, wobei der mehrkernige Rest unterschiedlich verknüpft sein kann,
Y für -O-, -CO- oder -NH- steht und im Falle der Verknüpfung mit einer Endgruppe -O- oder -NH-bedeutet,
a = 2,
b = Null bis 5,
c = 1 bis 5,
d = Null bis 4 und
e = Null bis 3 sind
und worin die Endgruppen durch Strukturelemente des Typs $R^3CO$ gebildet werden, durchführt.

3. Verfahren nach Anspruch 2, dadurch gekennzeichnet, daß man die Ester der Formeln (I) oder (II) in einer Menge von 0,01 bis 10 Mol-%, bezogen auf die Summe der Molzahlen von aromatischen Hydroxycarbonsäuren, gegebenenfalls aromatischen Aminocarbonsäuren, Diphenolen und gegebenenfalls Aminophenolen, einsetzt.

4. Verwendung der flüssigkristallinen Polykondensate nach Anspruch 1 zur Herstellung von Formkörpern, Folien, Fasern und Filamenten.